Europäisches Patentamt

European Patent Office

Office européen des brevets

(11) Veröffentlichungsnummer: **0 601 425 A1**

## EUROPÄISCHE PATENTANMELDUNG

(21) Anmeldenummer: **93119159.7**

(22) Anmeldetag: **27.11.93**

(51) Int. Cl.⁵: **B65G 1/14**, B65G 1/20, B65D 85/68

(30) Priorität: **05.12.92 DE 9216612 U**

(43) Veröffentlichungstag der Anmeldung:
**15.06.94 Patentblatt 94/24**

(84) Benannte Vertragsstaaten:
**ES FR GB IT SE**

(71) Anmelder: **Croon & Lucke Maschinenfabrik GmbH**
**Flachstrasse 14**
**D-88512 Mengen(DE)**

(72) Erfinder: **Schöller, Heinz**
**Unter dem Staffel 22**
**D-78239 Rielasingen/Worblingen(DE)**

(74) Vertreter: **Weiss, Peter, Dr. rer.nat.**
**Dr. Peter Weiss & Partner**
**Postfach 12 50**
**D-78229 Engen (DE)**

(54) **Gestell zur Aufnahme von bevorzugt vertikal zu lagernden Gegenständen.**

(57) Bei einem Gestell zur Aufnahme von bevorzugt vertikal zu lagernden Gegenständen (6), insbesondere von flächigen Teilen, wie beispielsweise Platten, Karosseriebleche od.dgl., weist zumindest eine Hebelanordnung (1, 2) Klinken (9, 13) auf, die über eine Kipptaste (3) von dem Gegenstand (6) in eine Haltelage schwenkbar und miteinander durch eine Verbindungsstange (14) verbunden sind. Dabei ist die Kipptaste (3) zwischen zwei aufeinanderfolgenden Klinken (9, 13) zweier benachbarter Hebelanordnungen (1, 2) angeordnet. Die Klinken (9, 13) einer ersten Hebelanordnung (1, 2) dienen als Anschlag für den Gegenstand (6), der beim Absetzen auf die Kipptaste (3) die Klinken (9, 13) der nachfolgenden Hebelanordnung (1, 2) in die Haltelage schwenkt, in welcher die Klinken (9, 13) den Gegenstand (6) übergreifen und als Anschlag für den nachfolgenden Gegenstand (6) dienen.

Fig.1

Die Erfindung betrifft ein Gestell zur Aufnahme von bevorzugt vertikal zu lagernden Gegenständen, insbesondere von flächigen Teilen, wie beispielsweise Platten, Karosseriebleche od. dgl., mit zumindest einer Hebelanordnung, welche Klinken aufweist, die über eine Kipptaste von dem Gegenstand in eine Haltelage schwenkbar und miteinander durch eine Verbindungsstange verbunden sind.

In den meisten Fällen werden beispielsweise Karosseriebleche in horizontaler Lage, eben so wie sie der Presse entnommen werden, in Gestellen übereinander gestapelt. Dabei weisen verbesserte Ausführungsbeispiele von derartigen Gestellen, sogen. Stapelsäulen, bereits Klinken auf, auf denen die Karosseriebleche beabstandet abgelegt werden, so daß sie sich nicht gegenseitig berühren.

In vielen Fällen erweist es sich jedoch als vorteilhaft, wenn derartige großflächige Teile vertikal gelagert werden. Eine vertikale Lagerung wird vor allem dann bevorzugt, wenn die Teile sich beispielsweise bei einer horizontalen Lagerung durchbiegen oder sonst verziehen könnten. Bei der vertikalen Lagerung werden die Teile in ein, in der Regel oben und stirnseitig offenes, also U-förmiges Gestell gesetzt, welches bodenseitige Vertiefungen aufweist, die das Blech am Verrutschen hindern. Zur Sicherung der Teile gegen ein Umfallen werden bei den bekannten Gestellen an den Seitenwänden angebrachte Klinken von Hand eingeklappt. Diese manuelle Tätigkeit ist umständlich, zeitraubend und kostspielig.

Eine wesentliche Verbesserung bringt bereits das deutsche Gebrauchsmuster 91 04 404.9, bei dem Einrichtungen zum klemmenden Festlegen des zu lagernden Gegenstandes vorgesehen sind, welche zumindest aus einer Taste bestehen, die beim Einsetzen des Gegenstandes in das Gestell einen Anschlag od.dgl. betätigt, welcher an den Gegenstand anschlägt.

In der Praxis hat sich hier die Schwierigkeit herausgestellt, daß beim Einsetzen die Teile genau zentriert werden müssen, damit sie von den Anschlägen ordnungsgemäß klemmend gehalten werden. Dieses Zentrieren bedeutet einen weiteren Aufwand.

Der vorliegenden Erfindung liegt die Aufgabe zugrunde, das o.g. Gestell so zu verbessern, daß die Teile auch ohne zusätzliche Zentrierung ordnungsgemäß automatisch in einem Gestell vertikal gelagert werden können.

Zur Lösung dieser Aufgabe führt, daß die Kipptaste zwischen zwei aufeinander folgenden Klinken zweier benachbarter Hebelanordnungen angeordnet ist, wobei die Klinken einer ersten Hebelanordnung als Anschlag für den Gegenstand dienen, der beim Absetzen auf die Kipptaste die Klinken der nachfolgenden Hebelanordnung in die Haltelage schwenkt, in welcher die Klinken den Gegenstand übergreifen und als Anschlag für den nachfolgenden Gegenstand dienen.

Dadurch, daß die Klinken der vorhergehenden Hebelanordnungen als Anschlag dienen, braucht ein Roboter den Gegenstand lediglich gegen diese Klinken zu lehnen und abzusenken. Durch das Absenken werden dann die Klinken der nachfolgenden Hebelanordnung vor den Gegenstand geschwenkt, wobei zwischen diesen Klinken benachbarter Hebelanordnungen genügend Luft sein kann, so daß eine Zentrierung nicht notwendig ist. Der zu lagernde Gegestand kann sich ruhig zwischen den Klinken benachbarter Hebelanordnungen bewegen. Dies geschieht im Bereich von wenigen Millimetern und ist für den Gegenstand schadlos.

Für einen ersten einzubringenden Gegenstand ist noch keine Hebelanordnung betätigt worden. Hier genügt es, wenn feste Anschlagstreifen im Lagergestell etwa horizontal angeordnet sind, so daß diese Anschlagstreifen als erste Klinken dienen.

Auch die Hebelanordnung selbst ist sehr einfach ausgestaltet, so daß sowohl ihre Betätigung als auch ihre Rückführung in die Ausgangslage ohne große Schwierigkeiten erfolgt. Die Kipptaste weist dabei einends eines Drehpunktes einen Puffer auf, auf den eine untere Randkante des Gegenstandes abgesetzt wird. Dieser Puffer kann beispielsweise aus Gummi bestehen. Andernends des Drehpunktes besitzt diese Kipptaste ein Gelenk mit einem Hebel, der wiederum mit einer unteren Klinke gelenkig verbunden ist.

Das Gelenk zwischen Hebel und unterer Klinke befindet sich dabei zwischen einem ortsfesten Drehpunkt für diese Klinke und einem Klinkenarm, welcher in Haltelage den Gegenstand übergreift. Durch diese Anordnung wird bewirkt, daß beim Betätigen der Kipptaste die Klinke eine Schwenkbewegung von unten in eine waagerechte Halteposition vollzieht. Gewichtsmäßig ist dies deshalb sehr günstig, weil beim Anheben des Gegenstandes der Klinkenarm versucht, nach unten zu fallen, was noch durch das Gewicht des Hebels verstärkt wird. Beide Gewichte heben ohne weiteres das Gewicht des Puffers und des dazugehörigen Kipptastenteils auf. Hierdurch wird eine Rückführung der Hebelanordnung in die Ausgangslage gewährleistet.

Ferner ist zur Betätigung einer oberen Klinke an der unteren Klinke nahe dem Gelenk mit dem Hebel noch ein weiteres Gelenk für eine Verbindungsstange vorgesehen. Diese Verbindungsstange ist jedoch an der oberen Klinke einends eines ortsfesten Drehpunktes für diese Klinke festgelegt, während sich andernends dieses Drehpunktes ein Klinkenarm erstreckt. Das bedeutet, daß diese Klinke bzw. der Klinkenarm sich in Ausgangslage in einer nahezu vertikalen Position befindet und von dort in eine etwa waagerechte Halteposition geschwenkt wird. Das Gewicht der Verbindungsstange incl. der oben beschriebenen Gewichtsverteilung bewirkt ohne weiteres, daß beim Anheben des Gegenstandes diese Klinke in die etwa vertikale Ausgangsposition zurückgeschwenkt wird.

Bevorzugt sind die benachbarten Klinken jeder Hebelanordnung und Kipptasten in ihren Drehpunkten über entsprechende Drehwellen miteinander verbunden. Ferner ist vorgesehen, daß die Klinken beidseits mit Gummipuffern belegt sind, da sie ja gleichzeitig als Anschläge für die zu lagernden Gegenstände dienen.

Die vorliegende Erfindung ist im übrigen nicht nur zum Lagern von vertikal angeordneten Gegenständen denkbar, sondern auch zur waagerechten Lagerung derartiger Gegenstände verwendbar. In diesem Fall muß beispielsweise ein Gegenstand in das um 90° gedrehte Gestell von unten oder oben eingelegt werden und wird kurzfristig waagerecht gegen die entsprechenden Klinkentasten verschoben.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 eine schematisch dargestellte Seitenansicht von zwei sich spiegelbildlich gegenüberliegenden Hebelanordnungen in einem nicht näher gezeigten Gestell zum Festlegen eines vertikal zu lagernden Gegenstandes;

Fig. 2 eine weitere Seitenansicht der Hebelanordnung gem. Fig. 1 in einer weiteren Gebrauchslage;

Fig. 3 eine separate Darstellung der Hebelanordnung gem. den Figuren 1 und 2 mit weiteren Vorrichtungselementen;

Fig. 4 eine teilweise dargestellte Draufsicht auf ein erfindungsgemäßes Gestell zum Festlegen von vertikal zu lagernden Gegenständen.

Im vorliegenden Fall geht es um eine Vorrichtung zum Festlegen von vertikal zu lagernden Gegenständen, wie beispielsweise Platten, Karosserieblechen od. dgl., wie sie beispielsweise in dem deutschen Gebrauchsmuster 91 04 404.9 gezeigt ist. Zur Beschreibung des entsprechenden Gestells wird auf dieses Gebrauchsmuster Bezug genommen, wobei es im vorliegenden Fall jedoch um Besonderheiten bezügl. einer linken und einer rechten Hebelanordnung 1 und 2 geht. Da beide Hebelanordnungen 1 und 2 sich spiegelbildlich gegenüber liegen, jedoch gleich ausgebildet sind, wird nur eine Hebelanordnung beschrieben.

Jede Hebelanordnung 1 und 2 weist eine Kipptaste 3 auf, welche um einen Drehpunkt 4 drehbar gelagert ist. Einerseits besitzt die Kipptaste 3 einen Gummipuffer 5, der verhindert, daß ein zu lagernder Gegenstand 6, wie beispielsweise im vorliegenden Ausführungsbeispiel eine Heckklappe eines Automobils, beim Aufsetzen auf die Kipptaste 3 beschädigt wird. Andererseits bildet die Kipptaste 3 mit einem Hebel 7 ein Gelenk 8, wobei der Hebel 7 andernends an einer Klinke 9 über ein Gelenk 10 verbunden ist.

Auch die Klinke 9 besitzt einen ortsfesten Drehpunkt 11, wobei dieser Drehpunkt 11 in der Regel mit dem nicht näher gezeigten Gestell gebildet ist. Dieser Drehpunkt 11 ist einends der Klinke 9 angeordnet, wobei sich das Gelenk 10 zwischen diesem Drehpunkt 11 und einem eigentlichen Klinkenarm 12 befindet.

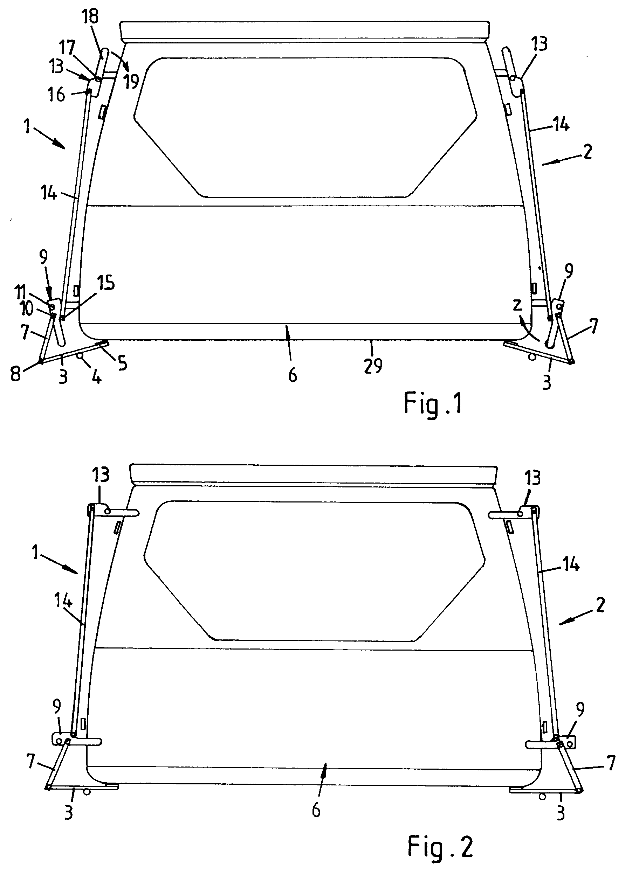

Wird ein Gegenstand 6 auf die Kipptaste 3 aufgesetzt, so dreht diese um den Drehpunkt 4 und nimmt dabei über den Hebel 7 die Klinke 9 mit und zwar in eine Haltelage, wie dies in Fig. 2 gezeigt ist. D.h., die Klinke 9 wird in Richtung z angehoben.

Mit der Klinke 9 nahe dem Gelenk 10 ist eine weitere, obere Klinke 13 über eine Verbindungsstange 14 verbunden. Die Verbindung geschieht ebenfalls über zwei Gelenke 15 und 16. Während sich das Gelenk 15, wie oben erwähnt, nahe dem Gelenk 10, d.h. zwischen dem Drehpunkt 11 und dem Klinkenarm 12 der unteren Klinke 9 befindet, ist das obere Gelenk 16 einends der oberen Klinke 13 vorgesehen, während sich deren Drehpunkt 17 zwischen diesem Gelenk 16 und einem Klinkenarm 18 befindet. Diese Anordnung bewirkt, daß bei einer Bewegung der unteren Klinke 9 in Richtung z die Verbindungsstange 14 nach oben gestoßen wird und der Klinkenarm 18 der oberen Klinke 13 entgegen der Richtung z in eine in Fig. 2 gezeigten Haltelage gebracht wird, wie dies durch den Pfeil 19 angedeutet ist. Auf diese Weise wird ein Gegenstand 6, wie in Fig. 2 gezeigt, von vier Klinken übergriffen.

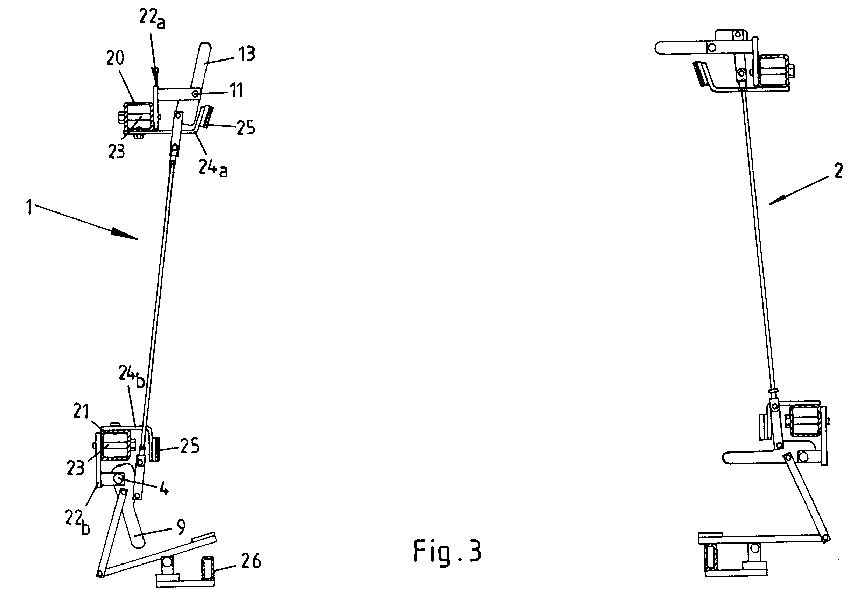

In Fig. 3 ist die Anordnung der Hebelanordnungen 1 und 2 insbesondere an einem oberen und unteren Kastenprofil 20 bzw. 21 des nicht näher gezeigten Gestells dargestellt. Hierzu sind entsprechende Montagewinkel 22a und 22b vorgesehen, welche mit der oberen Klinke 13 den Drehpunkt 11 und mit der unteren Klinke 9 den Drehpunkt 4 bilden. Zur Festlegung der Montagewinkel 22 dienen entsprechende Schraubenbolzen 23.

Ferner sind sowohl am oberen als auch am unteren Kastenprofil 20 bzw. 21 Stützwinkel 24a und 24b angeordnet, welche mit einem geeigneten Pufferstreifen 25 belegt sind. Diese Pufferstreifen 25 dienen der schonenden Abpufferung des beispielsweise von einem Roboter eingebrachten zu lagernden Gegenstandes 6, sofern dieser seitlich auspendelt.

Um eine Begrenzung der Bewegung der Hebelanordnungen 1 und 2 zu erreichen, ist die Kipptaste 3 von einem Auflagerprofil 26 unterlegt.

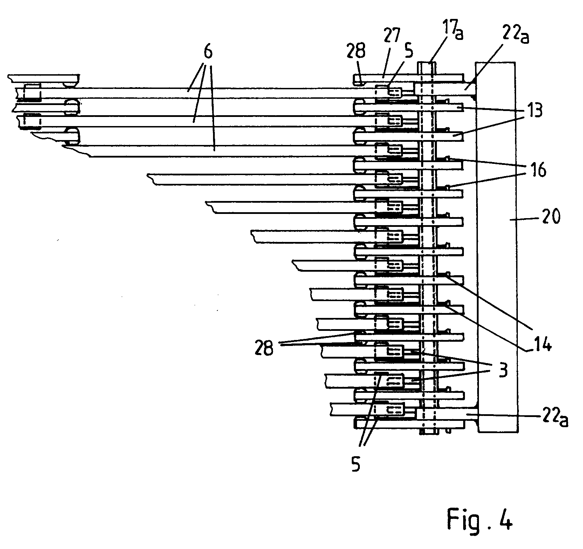

Es versteht sich von selbst, daß innerhalb eines Gestells an einem oberen bzw. unteren Kastenprofil 20 bzw. 21 eine Mehrzahl von derartigen Hebelanordnung 1 bzw. 2 festgelegt ist, wie dies in Fig. 4 angedeutet ist. Dabei sind die einzelnen Hebelanordnungen 1 bzw. 2 über ihre Drehpunkte 4 bzw. 11 miteinander verbunden, wobei der Drehpunkt 11 von einer durchgehenden Drehwelle 11a gebildet wird.

Die Funktionsweise der vorliegenden Erfindung ist die folgende:

An der Drehwelle 11a bzw. der nicht gezeigten unteren Drehwelle, welche die unteren Klinken miteinander vereint, befindet sich als erstes ein Anschlagstreifen 27, welcher bereits in einer etwa horizontalen Lage ausgelenkt ist und beispielsweise an dem Montagewinkel 22a bzw. 22b durch ein beliebiges Befestigungsmittel in dieser Lage festgelegt sein kann. Dieser Anschlagstreifen 27 kann ähnlich der jeweiligen Klinke 9 bzw. 13 ausgebildet sein. Er besitzt jedoch keine Verbindungsstange zu dem unteren Anschlagstreifen, da er keine Bewegung zu vollführen hat. Bevorzugt ist er allerdings zum Gegenstand 6 hin mit einem Gummipuffer 28 belegt.

Ein erster Gegenstand 6 wird nun in das Gestell eingebracht, bis er an den Anschlagstreifen 27 anschlägt. Jetzt wird dieser Gegenstand 6 abgesenkt, wobei seine untere Randkante 29 auf die Kipptaste 3 und dort insbesondere auf den Gummipuffer 5 auftrifft. D.h., diese Kipptaste 3 bzw. der Gummipuffer 5 ist zwischen dem Anschlagstreifen 27 und der nächstfolgenden Klinke 9 bzw. 13 angeordnet. Dies gilt für jede der nachfolgenden Kipptasten, wie dies aus Fig. 4 deutlich erkennbar ist.

Beim Betätigen der Kipptaste 3 werden die Klinken 9 und 13 in ihre Haltelage geschwenkt, wobei sie jeweils mit entsprechenden Gummipuffern 28 den Gegenstand 6 übergreifen. Bevorzugt sind die Klinken 9 bzw. 13 beidseits mit Gummipuffern 28 versehen, so daß ein nachfolgender Gegenstand wiederum an dem Gummipuffer 28 anschlägt und auf die ihm zugeordnete Kipptaste 3 abgesenkt werden kann, wodurch die nachfolgenden Klinken 9 bzw. 13 in ihre Haltelage geschwenkt werden. Dies geschieht fortlaufend, bis das Gestell mit den Gegenständen 6 gefüllt ist.

Zum Entfernen der Gegenstände 6 aus dem Gestell wird der Gegenstand 6 einfach angehoben, wodurch die Kipptaste 3 in ihre Ausgangslage zurückfällt und hierdurch die Klinken 9 und 13 abgesenkt bzw. angehoben werden. Dadurch wird der Gegenstand 6 zur Entnahme frei.

4

| POSITIONSZAHLENLISTE | | | | | | |
|---|---|---|---|---|---|---|
| 1 | Hebelanordnung | 34 | | | | |
| 2 | " | 35 | | | | |
| 3 | Kipptaste | 36 | | | | |
| 4 | Drehpunkt | 37 | | | | |
| 5 | Gummpuffer | 38 | | | | |
| 6 | Gegenstand | 39 | | | | |
| 7 | Hebel | 40 | | | | |
| 8 | Gelenk | 41 | | | | |
| 9 | Klinke | 42 | | | | |
| 10 | Gelenk | 43 | | | | |
| 11 | Drehpunkt | 44 | | | | |
| 12 | Klinkenarm | 45 | | | | |
| 13 | obere Klinke | 46 | | | | |
| 14 | Verbindungsstange | 47 | | | | |
| 15 | Gelenk | 48 | | | | |
| 16 | " | 49 | | | | |
| 17 | Drehpunkt | 50 | | | 17a | Drehwelle |
| 18 | Klinkenarm | 51 | | | | |
| 19 | Pfeil | 52 | | | | |
| 20 | oberes Kastenprof | 53 | | | | |
| 21 | unteres " | 54 | | | | |
| 22 | Montagewinkel | 55 | | | | |
| 23 | Schraubenbolzen | 56 | | | | |
| 24 | Stützwinkel | 57 | | | | |
| 25 | Pufferstreifen | 58 | | | | |
| 26 | Auflageprofil | 59 | | | | |
| 27 | Anschlagstreifen | 60 | | | | |
| 28 | Gummipuffer | 61 | | | | |
| 29 | untere Randkante | 62 | | | | |
| 30 | | 63 | | | | |
| 31 | | 64 | | | | |
| 32 | | 65 | | | | |
| 33 | | 66 | | | | |

## Patentansprüche

1. Gestell zur Aufnahme von bevorzugt vertikal zu lagernden Gegenständen (6), insbesondere von flächigen Teilen, wie beispielsweise Platten, Karosseriebleche od.dgl., mit zumindest einer Hebelanordnung (1, 2), welche Klinken (9, 13) aufweist, die über eine Kipptaste (3) von dem Gegenstand (6) in eine Haltelage schwenkbar und miteinander durch eine Verbindungsstange (14) verbunden sind, dadurch gekennzeichnet, daß die Kipptaste (3) zwischen zwei aufeinanderfolgenden Klinken (9, 13) zweier benachbarter Hebelanordnungen (1, 2) angeordnet ist, wobei die Klinken (9, 13) einer ersten Hebelanordnung (1, 2) als Anschlag für den Gegenstand (6) dienen, der beim Absetzen auf die Kipptaste (3) die Klinken (9, 13) der nachfolgenden Hebelanordnung (1, 2) in die Haltelage schwenkt, in welcher die Klinken (9, 13) den Gegenstand (6) übergreifen und als Anschlag für den nachfolgenden Gegenstand (6) dienen.

2. Gestell nach Anspruch 1, dadurch gekennzeichnet, daß erste Anschlagstreifen (27) vorgesehen sind, welche als Anschlag für den ersten einzubringenden Gegenstand (6) dienen, der die erste Hebelanordnung (1, 2) betätigt.

3. Gestell nach einem der Ansprüche 1-2, dadurch gekennzeichnet, daß die Kipptaste (3) einends eines Drehpunktes (4) einen Puffer (5) zum Abfangen einer unteren Randkante (29) des Gegenstandes (6) und andernends ein Gelenk (8) mit einem Hebel (7) aufweist, der mit einer unteren Klinke (9) gelenkig verbunden ist.

4. Gestell nach Anspruch 3, dadurch gekennzeichnet, daß sich ein Gelenk (10) zwischen Hebel (7) und Klinke (9) zwischen einem ortsfesten Drehpunkt (11) und einem Klinkenarm (12) befindet, so daß letzterer bei Betätigung der Kipptaste (3) eine Schwenkbewegung (Z) von unten in eine waagerechte Halteposition vollzieht.

5. Gestell nach Anspruch 4, dadurch gekennzeichnet, daß an der unteren Klinke (9) nahe dem Gelenk (10) ein Gelenk (15) für eine Verbindungsstange (14) vorgesehen ist, welche anderenends mit einer oberen Klinke (13) eine Verbindung über ein Gelenk (16) eingeht.

6. Gestell nach Anspruch 5, dadurch gekennzeichnet, daß das obere Gelenk (16) einen ortsfesten Drehpunkt (17) zwischen dem Gelenk (16) und einem Klinkenarm (18) besitzt, so daß letzterer bei Betätigung der Verbindungsstange (14) eine Schwenkbewegung von einer etwa vertikalen Lage in eine etwa horizontale Halteposition vollzieht.

7. Gestell nach Anspruch 6, dadurch gekennzeichnet, daß die benachbarten Klinken (9, 13) und Kipptaste (3) einer Hebelanordnung (1, 2) jeweils an einer gemeinsamen Drehwelle (4, 11, 17) angeordnet sind.

8. Gestell nach wenigstens einem der Ansprüche 1-7, dadurch gekennzeichnet, daß die Klinken (9, 13) beidseits mit Gummipuffern (28) belegt sind.

Fig .1

Fig . 2

Fig. 3

Fig. 4

| Europäisches Patentamt | EUROPÄISCHER RECHERCHENBERICHT | Nummer der Anmeldung EP 93 11 9159 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | DE-U-92 16 612 (CROON & LUCKE MASCHINENFAB. GMBH) * das ganze Dokument * --- | 1-8 | B65G1/14 B65G1/20 B65D85/68 |
| D,Y | DE-U-91 04 404 (CROON & LUCKE MASCHINENFAB. GMBH) * das ganze Dokument * --- | 1-3,6-8 | |
| Y | EP-A-0 304 698 (TAMGLASS OY) * Spalte 2, Zeile 28 - Zeile 39 * * Abbildung 2 * ----- | 1-3,6-8 | |

| | RECHERCHIERTE SACHGEBIETE (Int.Cl.5) |
|---|---|
| | B65G B65D |

Der vorliegende Recherchenbericht wurde für alle Patentansprüche erstellt

| Recherchenort | Abschlußdatum der Recherche | Prüfer |
|---|---|---|
| DEN HAAG | 15. Februar 1994 | Beernaert, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument

EPO FORM 1503 03.82 (P04C03)